## Europäisches Patentamt
## European Patent Office
## Office européen des brevets

(11) Publication number: **0 064 847**
**B1**

(12) **EUROPEAN PATENT SPECIFICATION**

(45) Date of publication of patent specification: **10.09.86**

(21) Application number: **82302236.3**

(22) Date of filing: **28.04.82**

(51) Int. Cl.⁴: **H 04 N 5/44,** H 04 N 17/00

(54) **Improved television receiver monitoring apparatus.**

<br>

(30) Priority: **06.05.81 AU 70134/81**

(43) Date of publication of application:
**17.11.82 Bulletin 82/46**

(45) Publication of the grant of the patent:
**10.09.86 Bulletin 86/37**

(84) Designated Contracting States:
**CH DE FR IT LI NL SE**

(56) References cited:

**PATENTS ABSTRACTS OF JAPAN, vol. 5, no. 74(E-57)(746), 16th May 1981**

<br>

<br>

(73) Proprietor: **Mewes, Thomas**
**17, Woodville Road**
**Mooroolbark Victoria 3138 (AU)**

(73) Proprietor: **Morgan, Gary C.**
**48 Berry Street**
**East Melbourne Victoria 3002 (AU)**

(72) Inventor: **Mewes, Thomas**
**17 Woodville Road**
**Mooroolbark Victoria, 3138 (AU)**

(74) Representative: **Boydell, John Christopher et al**
**Stevens, Hewlett & Perkins 5 Quality Court**
**Chancery Lane**
**London, WC2A 1HZ (GB)**

<br>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to an apparatus for monitoring a television receiver. In particular, it relates to an apparatus for monitoring the channel to which a television receiver is tuned.

Television receivers produce varying magnetic fields of low frequency such as emanate from the loudspeaker transformer or the yoke of the cathode-ray tube. These varying magnetic fields can be used to induce an electrical signal in a loop or coil of wire, which signal is unique to the video/audio content of the channel to which the receiver is tuned. This phenomenon can be used to monitor the tuning of the receiver, that is to monitor the channel being viewed at any particular time.

One known monitoring apparatus electrically compares the induced signal with a signal produced by a slave receiver. If the signals coincide, this fact is recorded on a memory or the like; if there is no coincidence, the apparatus sequentially tunes the slave receiver to each available channel until there is coincidence. As the known monitoring apparatus employ mathematical or analogue techniques to compare signals from the master and slave receivers, they are not capable of satisfactory operation if the master receiver is tuned by way of a video cassette recorder or cable television tuner interposed between antenna/cable and master receiver. These devices produce a time delay in the signal path to the master receiver, and the known apparatus cannot compensate for this time delay.

The object of the invention is to provide an improved television monitoring apparatus which employs digital techniques to compensate for time delays produced by extra tuning devices (such as video recorder or cable television tuner) interposed between transmission source (antenna or cable) and master receiver.

Accordingly, this invention provides apparatus for monitoring the channel to which a master television receiver is tuned, comprising means to produce a first pulse train characteristic of the video or audio content of the television channel to which the master receiver is tuned, means to produce a second pulse train characteristic of the video or audio content of the channel to which a slave receiver is tuned, means to compare the first and second pulse trains and produce a further pulse if the first and second pulse trains do not coincide, and means responsive to the further pulse to sequentially tune the slave receiver to the next available channel, characterized in that the duration of each of the pulses of the first pulse train is sufficiently extended to enable the corresponding pulses of the second train to coincide with those of the first pulse train when the first pulses are delayed by passing through an auxiliary tuning device interposed between the source of the video signal and master receiver.

One embodiment of the invention will be described with reference to the accompanying drawings in which:

Figure 1 schematically illustrates the apparatus of the invention;

Figure 2 schematically illustrates part of Figure 1, but including an auxiliary tuning device; and

Figures 3 and 4 represent typical digital waveforms produced by the apparatus of the invention.

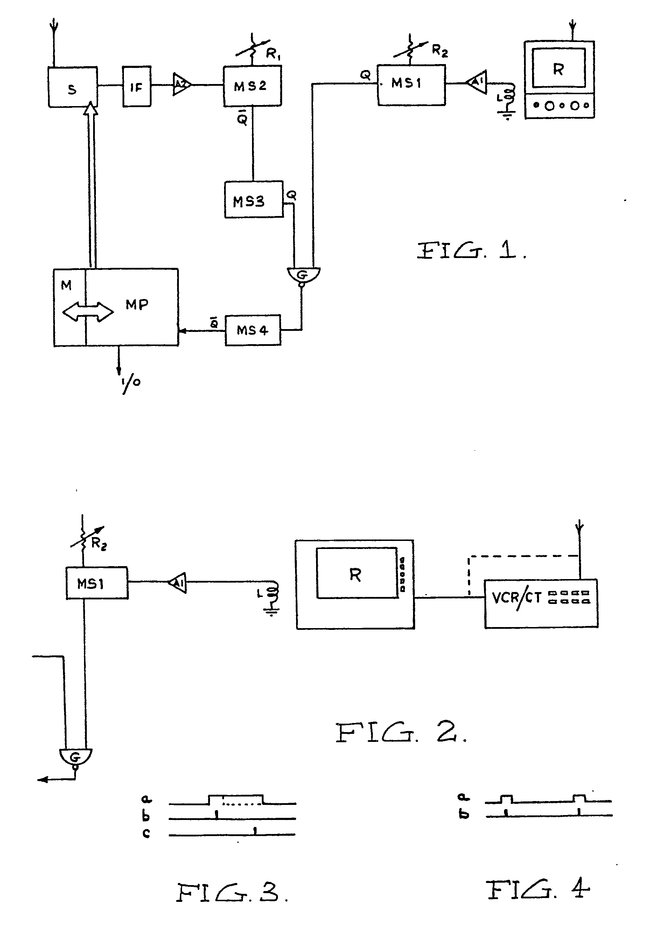

Figure 1 shows a master television receiver R whose low frequency magnetic fields, such as emanate from the loudspeaker transformer or cathode-ray tube yoke, induce a signal in loop L. The induced signal is unique to the video/audio signal content of the channel to which receiver R is tuned. The induced signal is amplified and shaped into a digital pulse train by amplifier wave shapes A1. The output of A1 fires monostable multivibrator MS1 on receipt of an impulse generated by master receiver R. The Q output of MS1 is fed to one input of gate G acting as a coincidence detector.

Slave receiver S is sequentially tuned to all available channels on instructions received from micro-processor MP. MP produces a series of analogue tuning voltages causing slave receiver S to advance sequentially from one channel to the next. Slave receiver S thus searches through all channels and provides signals to amplifier/demodulator IF, which signals are characteristic of the video/audio content of the particular channel to which S is tuned at any time. Amplifier/wave shaper A2 produces a digital pulse train of like kind to the pulse train produced by A1.

The slave pulses fires monostable multivibrator MS2, which acts as a variable delay circuit. The duration of the delay is controlled by potentiometer $R_1$, and typically can be set at 0—100 μsecs. At the end of the delay period, the $\overline{Q}$ output of MS2 fires monostable MS3, whose Q output is fed to the second input of gate G.

Referring now to Figure 4, (a) indicates the master pulses emanating from MS1, which pulses are about 0.3 μsec in length, and (b) indicates the slave pulses emanating from MS3, and are about 0.1 μsec in length. Potentiometer $R_1$ is used to set the delay of pulses (b) so that they fall within the duration of master pulses (b), as shown in Figure 4, thus producing coincidence.

When MS1 and MS3 fire at the same time, the resulting output of gate G fires retriggerable monostable multivibrator MS4. Sustained coincidence of pulse trains into gate G causes the $\overline{Q}$ output of MS4 to remain low, and this condition is recorded in memory M or fed through port I/O to an external recording apparatus.

If there is no coincidence, there is no output from gate G, the $\overline{Q}$ output of MS4 goes high and triggers the microprocessor MP to switch slave tuner S through all channels until coincidence again occurs.

Referring now to Figure 2, the apparatus is the same as that shown in Figure 1, but includes an auxiliary tuning device VCR/CT interposed between the source of transmission (antenna/cable) and master receiver R. The auxiliary device could be a video cassette recorder (VCR), or a cable television tuner (CT). In both instances, the master receiver is permanently tuned to a special channel and the channel to be viewed is selected by the appropriate controls on the VCR or CT. The resulting time delay in the pulses is shown in Figure 3, where (b) represents slave pulses without VCR/CT, and (c) represents slave pulses with VCR/CT. As can be seen, with the VCR/CT, pulse train (c), the slave pulses arrive at gate G earlier than the master pulses (shown in dotted lines) and coincidence therefore cannot occur. This problem is overcome by broadening the master pulses (a) by adjustment of potentiometer $R_2$ associated with MS1, so that the slave pulses will fall within the duration of the master pulses regardless of the presence of a VCR/CT.

Thus the use of digital techniques and the setting of appropriate delays enables the monitoring apparatus to be used with or without auxiliary tuning devices interposed between source and master receiver.

### Claims

1. Apparatus for monitoring the channel to which a master television receiver (R) is tuned, comprising means (L, A1, MS1) to produce a first pulse train characteristic of the video or audio content of the television channel to which the master receiver (R) is tuned, means (IF, A2, MS2, MS3) to produce a second pulse train characteristic of the video or audio content of the channel to which a slave receiver (S) is tuned, means (G) to compare the first and second pulse trains and produce a further pulse if the first and second pulse trains do not coincide, and means (MP) responsive to the further pulse to sequentially tune the slave receiver (S) to the next available channel, characterized in that the duration of each of the pulses of the first pulse train is sufficiently extended to enable the corresponding pulses of the second train to coincide with those of the first pulse train when the first pulses are delayed by passing through an auxiliary tuning device (VCR/CT) interposed between the source of the video signal (antenna/cable) and the master receiver (R).

2. The apparatus of claim 1, wherein the means to produce the first pulse train includes a monostable multivibrator (MS1) which can be adjusted to alter the duration of the pulses.

3. The apparatus of claim 1, wherein the means to produce the second pulse train includes two monostable multivibrators (MS2, MS3) adjustable to introduce a time delay to compensate for the time delay of the first pulse train when it passes through the auxiliary tuning device (VCR/CT).

4. The apparatus of claim 1, wherein said means to compare the first and second pulse train comprises a logic gate (G), which is enabled during a pulse of the first pulse train, and is activated when pulses of the second pulse train coincide.

### Patentansprüche

1. Apparat zur Überwachung des Kanals, auf den ein Haupt-Fernsehempfänger (R) eingestellt ist, enthaltend eine Vorrichtung (L, A1, MS1) zur Erzeugung einer ersten Impulsfolge, die charakteristisch ist für den Video- oder Toninhalt des Fernsehkanals, auf den der Hauptempfänger (R) eingestellt ist, eine Vorrichtung (IF, A2, MS2, MS3) zur Erzeugung einer zweiten Impulsfolge, die charakteristisch ist für den Video- oder Toninhalt des Kanals, auf den ein Nebenempfänger (S) eingestellt ist, eine Vorrichtung (G) zum Vergleich der ersten mit der zweiten Impulsfolge und zur Erzeugung eines weiteren Impulses, wenn die erste und die zweite Impulsfolge nicht miteinander übereinstimmen, und eine auf den weiteren Impuls ansprechende Vorrichtung (MP) zur aufeinanderfolgenden Einstellung des Nebenempfängers (S) auf den jeweils nächsten verfügbaren Kanal, dadurch gekennzeichnet, daß die Dauer jedes der Impulse der ersten Impulsfolge ausreichend verlängert ist, um die entsprechenden Impulse der zweiten Impulsfolge in die Lage zu versetzen, mit denen der ersten Impulsfolge in Übereinstimmung zu sein, wenn die ersten Impulse durch Passieren einer Hilfseinstellvorrichtung (VCR/CT) zwischen der Quelle des Videosignals (Antenne/Kabel) und dem Hauptempfänger (R) verzögert werden.

2. Apparat nach Anspruch 1, bei dem die Vorrichtung zur Erzeugung der ersten Impulsfolge einen monostabilen Multivibrator (MS1) enthält, der zur Änderung der Impulsdauer eingestellt werden kann.

3. Apparat nach Anspruch 1, bei dem die Vorrichtung zur Erzeugung der zweiten Impulsfolge zwei monostabile Multivibratoren (MS2, MS3) enthält, die zur Einführung einer Zeitverzögerung einstellbar sind zur Kompensation der Zeitverzögerung der ersten Impulsfolge, wenn sie die Hilfseinstellvorrichtung (VCR/CT) passiert.

4. Apparat nach Anspruch 1, bei dem die Vorrichtung zum Vergleich der ersten mit der zweiten Impulsfolge ein logisches Gatter (G) enthält, das während eines Impulses der ersten Impulsfolge in den Ansprechzustand versetzt und durch übereinstimmende Impulse der zweiten Impulsfolge aktiviert wird.

### Revendications

1. Appareil pour contrôler le canal sur lequel un récepteur principal de télévision (R) est modulé, comprenant des moyens (L, A1, MS1) pour engendrer un premier train d'impulsions caractéristique du contenu vidéo ou audio du canal de télévision sur lequel le récepteur principal (R) est modulé; des moyens (IF, A2, MS2, MS3) pour engendrer un second train d'impulsions caractéristique du contenu vidéo ou audio du canal sur lequel un récepteur secondaire (S) est modulé; des moyens (G) pour comparer les premier et second trains d'impulsions et pour engendrer une impulsion supplémentaire si ces premier et second trains d'impulsions ne coïncident pas; et des moyens (MP) réagissant à l'impulsion supplémentaire, de façon à moduler séquentiellement le récepteur secondaire (S) sur le canal disponible suivant, appareil caractérisé par le fait que la durée de chacune des impulsions du premier train d'impulsions est suffisamment prolongée pour permettre aux impulsions correspondantes du second train de coïncider avec celles du premier train d'impulsions, lorsque les premières impulsions sont temporisées en passant à travers un dispositif auxiliaire de modulation (VCR/CT) intercalé entre la source du signal vidéo (antenne/câble) et le récepteur principal (R).

2. Appareil selon la revendication 1, dans lequel les moyens pour produire le premier train d'impulsions consistent en un multivibrateur monostable (MS1) qui peut être ajusté pour modifier la durée des impulsions.

3. Appareil selon la revendication 1, dans lequel les moyens pour produire le second train d'impulsions consistent en deux multivibrateurs mono-stables (MS2, MS3) pouvant être ajustés pour introduire une temporisation, de façon à contrebalancer la temporisation du premier train d'impulsions lorsqu'il passe à travers le dispositif de modulation auxiliaire (VCR/CT).

4. Appareil selon la revendication 1, dans lequel lesdits moyens pour comparer les premier et second trains d'impulsions consistent en une porte logique (G) qui est validée pendant une impulsion du premier train d'impulsions, et est activée lorsque des impulsions du second train d'impulsions coïncident.

FIG. 1.

FIG. 2.

FIG. 3.

FIG. 4